**Europäisches Patentamt**

**European Patent Office**

**Office européen des brevets**

(19)

(11) Veröffentlichungsnummer : **0 355 398 B1**

(12) **EUROPÄISCHE PATENTSCHRIFT**

(45) Veröffentlichungstag der Patentschrift :
**16.09.92 Patentblatt 92/38**

(21) Anmeldenummer : **89113235.9**

(22) Anmeldetag : **19.07.89**

(51) Int. Cl.⁵ : **G01M 17/04**

(54) **Elektronisches Stossdämpferprüfgerät.**

(30) Priorität : **16.08.88 DE 8810344 U**

(43) Veröffentlichungstag der Anmeldung :
**28.02.90 Patentblatt 90/09**

(45) Bekanntmachung des Hinweises auf die
Patenterteilung :
**16.09.92 Patentblatt 92/38**

(84) Benannte Vertragsstaaten :
**AT BE CH DE ES FR GB GR IT LI LU NL SE**

(56) Entgegenhaltungen :
**EP-A- 0 202 036**
**EP-A- 0 220 985**
**US-A- 3 383 909**
**US-A- 4 376 387**

(56) Entgegenhaltungen :
**PATENT ABSTRACTS OF JAPAN Band 7, Nr.
23 (P-171)(1168), 29. Januar 1983; & JP - A -
57175241 (KIYATAPIRAA MITSUBISHIK.K.)
28.10.1982**

(73) Patentinhaber : **Needleman, Nathan**
**Bachemer Strasse 27**
**W-5300 Bonn 2 (DE)**
Patentinhaber : **Crummenauer, Helga**
**Lessingstrasse 27**
**W-5300 Bonn 2 (DE)**

(72) Erfinder : **Needleman, Nathan**
**Bachemer Strasse 27**
**W-5300 Bonn 2 (DE)**

(74) Vertreter : **Ratzel, Gerhard, Dr.**
**Seckenheimer Strasse 36a**
**W-6800 Mannheim 1 (DE)**

EP 0 355 398 B1

**Beschreibung**

Die Erfindung betrifft ein Stoßdämpferprüfgerät mit elektronischen Einheiten zur Erfassung von Schwingbewegungen der Karosserie und zur Signalaufbereitung und Auswertung.

Stoßdämpfer in Kraftfahrzeugen fangen beschleunigte Massen, die durch Entspannung von Federn entstehen auf, so daß diese gedämpft werden. Es ist daher erforderlich, die Funktionssicherheit solcher Stoßdämpfer zu prüfen.

Es sind eine Vielzahl von Stoßdämpferprüfgeräten bekannt, die die Schwingungen des Fahrzeuges auf sogenannten Prüfständen aufzeichnen.

Die herkömmlichen Bauarten sind jedoch sehr aufwendig konzipiert und daher sehr teuer. Ferner weisen die bekannten Prüfgeräte sich dadurch aus, daß sie unpraktisch und kompliziert zu bedienen sind. Die Meßergebnisse sind oftmals ungenau und nur schwer zuzuordnen und auszuwerten.

Aus der US-A- 3 383 909 und EP-A-0 202 036 sind Stoßdämpferprüfgeräte bzw. Prüfsysteme bekannt, welche an das auf dem Prüfstand befindliche Fahrzeug angesetzt werden und die mittels Sensoren erfaßten Daten an ein Auswertegerät weitergeleitet werden.

Auf einem entsprechenden Sichtgerät können die erfaßten und ausgewerteten Daten abgelesen werden.

All diesen System ist gemeinsam, daß sie nicht als kompaktes Gerät ausgebildet sind, in denen die entsprechenden Elemente integriert sind und auf dem das Meßergebnis bzw. dessen Auswertung abgelesen werden kann, was sich die vorliegende Erfindung unter anderem als Aufgabe gestellt hat.

Der Erfindung liegt daher die Aufgabe zugrunde, ein Stoßdämpferprüfgerät bereitzustellen, das mit elektronischen Einheiten zur Erfassung von Schwingbewegungen der Karosserie und zur Signalaufbereitung und Auswertung der ermittelten Daten ausgerüstet ist.

Ferner liegt die Aufgabe der Erfindung darin, das Prüfgerät derart zu gestalten, daß der Anwender die ermittelten Daten auf einfachste Weise erkennt und gegebenenfalls ausdrucken kann. Bei der Messung eventuell verursachter Fehler sollen durch das erfindungsgemäße Gerät ausgeglichen werden können, ohne dabei die vorhergehenden Meßdaten zu verlieren.

Ein weiterer Erfindungsgedanke liegt darin, das Prüfgerät handlich, robust und stromnetzunabhängig zu gestalten.

Diese Aufgaben werden erfindungsgemäß durch ein Stoßdämpferprüfgerät gemäß dem vorgeschlagenen Anspruch 1 gelöst, wobei besonders bevorzugte Ausführungsmerkmale der Erfindung in den abhängigen Ansprüchen gekennzeichnet sind.

Anhand den beigefügten Zeichnungen, die ein besonders bevorzugtes Ausführungsbeispiel der Erfindung zeigen, wird diese nun näher erläutert.

Dabei zeigen:

Figur 1 ein Schemabild des erfindungsgemäßen Prüfgerätes;

Figur 2 das Display;

Figur 3 einen Schaltplan des Prüfgerätes;

Figur 4 einen Schaltplan des Prüfgerätes in einem weiteren Ausführungsbeispiel;

Figur 5 das Stoßdämpferprüfgerät in einer pespektivischen Darstellung;

Figur 6 ein Ausführungsbeispiel des Tastenfeldes.

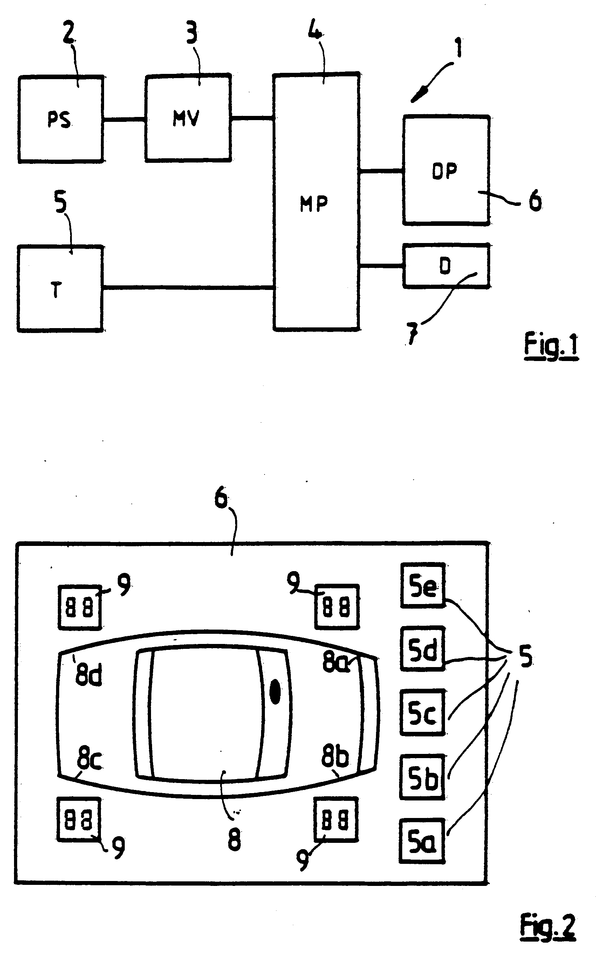

Figur 1 zeigt einen Schemaplan des erfindungsgemäßen Stoßdämpferprüfgerätes 1.

Der Sensor 2, in diesem Ausführungsbeispiel ein Piezosensor, erfaßt die Schwingbewegungen einer, auf einem Prüfstand befindlichen Kraftfahrzeugkarosserie. Zur Signalaufbereitung und Auswertung der erfaßten Daten, sind dem Piezosensor 2 ein Meßwertverstärker 3 und ein Mikroprozessor 4 nachgeschaltet. Über die Tastatur 5 erfolgt die Befehlseingabe und über das Display 6 können die ausgewerteten Meßdaten abgelesen werden.

Über Schnittstellen können weitere Peripheriegeräte 7, wie z. B. Drucker angeschlossen werden.

Die verwendeten Elemente sind in einem Gehäuse 12 gekapselt.

Die Figur 2 zeigt das Display 6.

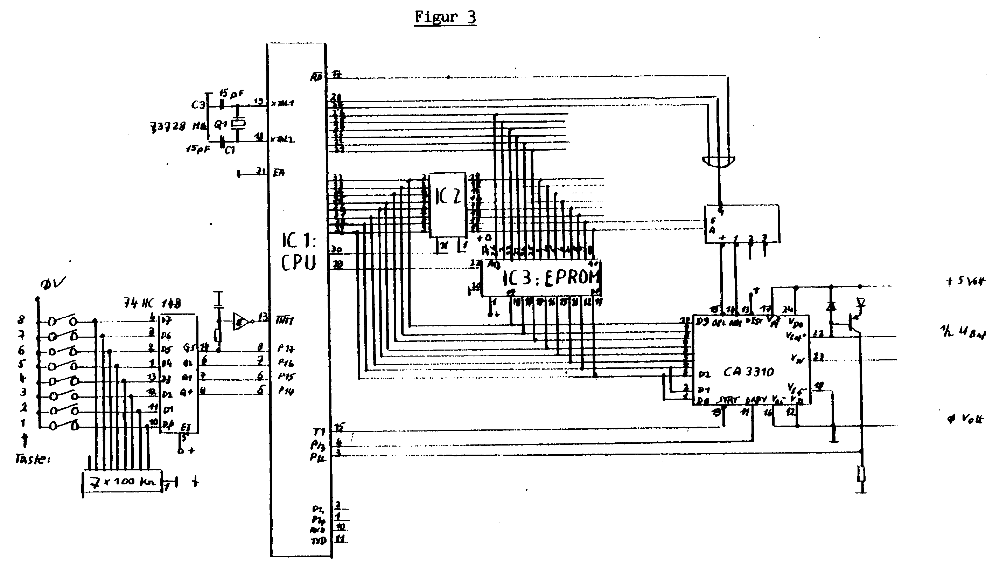

Die Figur 3 einen Schaltplan des erfindungsgemäßen Prüfgerätes.

Anhand den Figuren 2 und 3 wird nun die Funktion des Prüfgerätes erläutert.

Mit der Taste 5a ("on/next") wird das Gerät eingeschaltet. Das Display 6 zeigt zur Arbeitshilfe das Schemabild 8 einer KFZ-Karosserie, an dessen Eckpunkten 8a bis 8d die Meßwertanzeigen 9 angeordnet sind.

Nach Betätigen der Taste 5a ("on/next") werden die letzten Meßwerte angezeigt.

Ein blinkender Dezimalpunkt markiert die Meßstelle, die für die nächste Messung selektiert ist.

Durch ein weiteres Drücken der Taste 5a ("on/next") wird auf die nächste Meßstelle geschaltet. Wenn während 50 Sekunden keine Taste betätigt wird, schaltet sich das Gerät automatisch ab, ohne die Daten zu verlieren.

Die Taste 5e ("clear") löscht alle gespeicherten Meßwerte, setzt alle Meßwertanzeigen 9 auf "00" und

2

selektiert die Meßstelle von der Karosserie gesehen von vorne links.

Mit der Taste 5b ("Test") wird die selektierte Meßstelle gemessen. Die durch einen Stoß angeregten mechanischen Karosserieschwingungen werden gemessen, ausgewertet und anschließend auf dem 7-Segment-Display angezeigt.

Die Messung kann beliebig wiederholt werden. Der Zustand der Stoßdämpfer kann aus einer Bewertungstabelle abgelesen werden.

Die Taste 5d ("print") dient zum Ausdrucken der Meßresultate über eine serielle Schnittstelle. Diese Option dient zum Dokumentieren aller Servicearbeiten.

Die Taste 5c ("page") dient zum Speichern bis vier Meßreihen. Durch Drücken dieser Taste wird auf die nächste Seite geschalten, die wieder Meßwerte der vier Stoßdämpfer aufnehmen kann. Während dem Drücken der Taste wird auf dem Display die Seitennummer (1 bis 4) angezeigt.

Nach Seite 4 wird wieder auf Seite 1 geschalten, und die früheren Meßdaten angezeigt. Die Speisung des Gerätes erfolgt durch eine 9-Volt-Batterie oder durch einen 9-Volt-Akku.

Wenn die Batteriespannung unter den zulässigen Wert sinkt, wird dies durch Blinken der drei Dezimalpunkte der nichtselektierten Meßstellen angezeigt.

Die Batterie muß ausgewechselt und die gespeicherten Meßwerte sollen mit der Taste 5e ("clear") gelöscht werden.

Die Anzeige ist vorzugsweise mit einer Flüssigkristallanzeige ausgestattet.

Die Messungen werden von 1 bis 4 angezeigt, z. B. von links vorne bis hinten links. Jede erfolgte Messung wird gespeichert und bleibt auf der Anzeige, bis sie mit einem speziellen Knopfdruck wieder gelöscht wird.

Ist eine Messung durch eine menschliche Unachtsamkeit offenbar nicht richtig ausgeführt worden, kann durch Knopfdruck die eben ausgeführte Messung gelöscht werden und korrekt neu ausgeführt werden. Die anderen Messungen bleiben gespeichert.

Abschließend kann die Testperson alle vier Messungen zusammen vom Display ablesen.

Auch wenn nach einiger Zeit die Messungen automatisch erlöschen, können diese mittels Knopfdruck (Memory) auch noch am nächsten Tag sofort wieder aufgerufen und abgelesen werden.

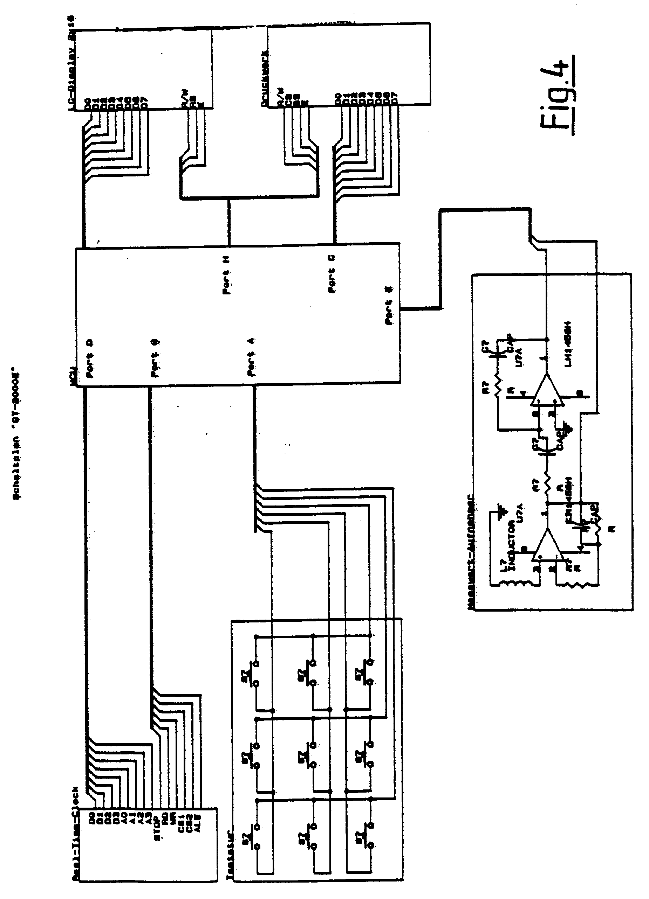

Die Figur 4 zeigt einen Schaltplan einer weiteren Ausführungsvariante dieses erfindungsgemäßen Stoßdämpferprüfgerätes 1.

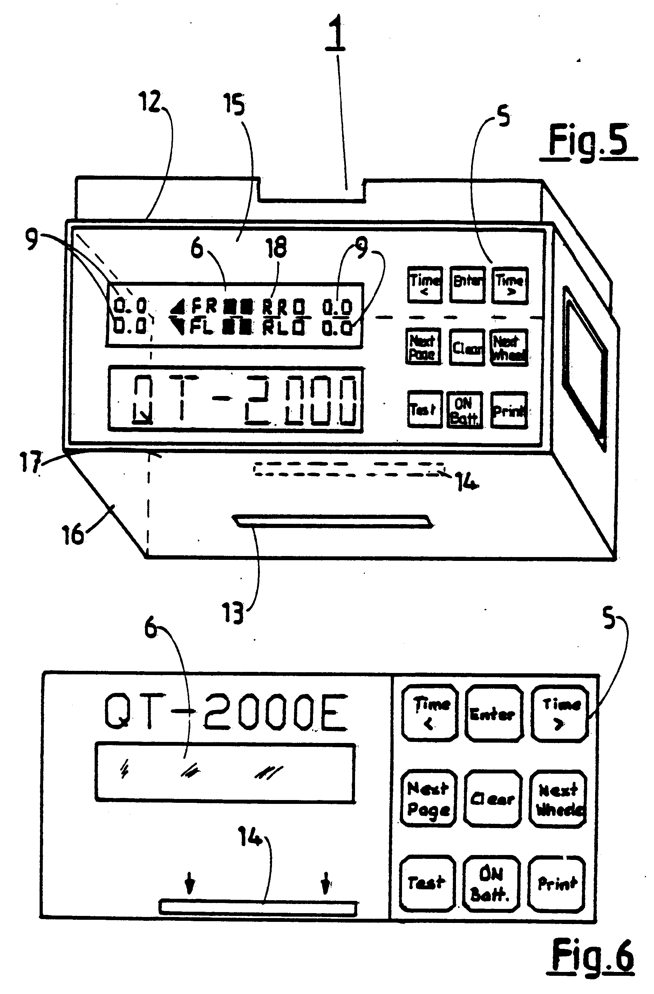

Figur 5 zeigt das Stoßdämpferprüfgerät 1 in einem weiteren Ausführungsbeispiel in einer perspektivischen Darstellung.

Wie aus dieser Ansicht zu erkennen ist, weist das Stoßdämpferprüfgerät 1 ein Gehäuse 12 auf. Der Drucker ist in diesem Gerät integriert. Hierzu sind, wenn das Display als Oberseite 15 betrachtet wird, in der Seitenwand 16 ein Auslaß 13 und im Bodenbereich 17 ein Einlaß 14 für einen Druckerstreifen vorgesehen.

Alternativ kann der Papierstreifeneinlaß 14 auch im Bereich des Displays angeordnet sein, wie dies in Figur 6 dargestellt ist.

Im Zusammenhang mit den Figuren 5 und 6 wird nun die Funktion dieses Ausführungsbeispiels erläutert.

Das Gerät wird durch Drücken der Taste "ON/Batt." eingeschaltet. Auf der Anzeige wird für ca. 3 Sekunden eine Säule sichtbar, deren Länge Auskunft über die Batteriespannung gibt. Danach schaltet die Anzeige auf das Hauptbild um. Durch erneutes Drücken dieser Taste erscheint abermals die Anzeige der Batteriespannung.

Falls nach 30 Sekunden keine Taste gedrückt wird, schaltet sich das Gerät automatisch aus.

Mit den Tasten "Time >" und "Time <" und "Enter" können Zeit und Datum eingegeben werden.

Nach Drücken der Taste "Time >" oder "Time <" steht in der Anzeige:

z. B.:

$$\text{T i m e}$$
$$19:27$$

Die erste Zahl blinkt. Wird nun die Taste nochmals betätigt, ändert sich die erste Zahl in positiver Richtung. Bei Betätigung der Taste "Time <" ändert sich die Zahl in negativer Richtung. Durch Drücken der "clear"-Taste werden alle Zahlen gelöscht. Sobald die richtige Zahl eingegeben ist, wird die "Enter"-Taste gedrückt. Der Wert wird gespeichert und die nächste Zahl blinkt. Nach der vierten Zahl springt die Anzeige um und zeigt nun:

z. B.:

$$\text{D a t e}$$
$$14.09.1987$$

Die Einstellung erfolgt genau wie vorher. nach der letzten Zahl erscheint wird das Hauptbild.

Durch Drücken der Taste "Next Page" erfolgt eine Information über die aktuelle Seite (Auto). Die Anzeige sieht z. B. folgendermaßen aus:

```
                    Page 3
                  KL-U-5688
```

Durch nochmaliges Drücken erhöht sich die Seite. Die Eingabe der Autonummer oder einer anderen Kennung erfolgt wie vorher mit der Taste "Time >" oder "Time <". Zuerst erscheinen die Zahlen und dann die Buchstaben. Durch drücken der "Clear"-Taste werden alle Zeichen dieser Seite gelöscht. Nach Eingabe aller Stellen erscheint das Hauptbild.

Durch Drücken der Taste "Next Wheel" ändert sich im Hauptbild die Anzeige des jeweils gültigem Stoßdämpfers. Wird die Taste "Clear" während das Hauptbild sichtbar ist betätigt, erscheint in der Anzeige:

```
              Press  "Clear"
              for all clear
```

Mit "Enter" gelangt man wiederum ins Hauptbild. Falls für länger als 30 Sekunden keine Taste gedrückt wird, schaltet sich das Gerät ab.

Durch Drücken der Taste "Test" erscheint die aktuelle Seite (Auto) in der Anzeige. Somit besteht die Möglichkeit zu überprüfen, ob das richtige Auto und der richtige Stoßdämpfer angewählt wurde. Zusätzlich besteht die Möglichkeit, noch die Daten in der Anzeige zu ändern. Wenn zum zweiten Mal auf die Taste gedrückt wird, wird der eigentliche Testvorgang ausgelöst. Dazu muß durch einen kräftigen Druck nach unten, das Auto an dem entsprechenden Stoßdämpfer zum Schwingen gebracht werden. War der Druck zu klein, wird nicht getestet. Erst ab einer bestimmten Kraft reagiert das Gerät automatisch und zeigt im Hauptbild für diesen Stoßdämpfer einen zweistelligen Zahlenwert an. In der Anzeige blinkt nun der nächste zu messende Stoßdämpfer und so weiter.

Um den Ausdruck der Werte eines bestimmten Autos zu erhalten, ist die Taste "Print" zu drücken. In der Anzeige erscheint, wie vorher bei der "Test"-Taste, die Anzeige der aktuellen Seite. Sollte es nicht die richtige sein, dann ist die Taste "Page" zu drücken, und zwar so lange bis die gewünschte Seite erscheint. Auch ist es möglich, die Daten in der Anzeige noch zu ändern. Der zweite Druck auf die "Print"-Taste löst den Printvorgang aus. Nach Beendigung des Printvorganges erscheint wiederum das Hauptbild.

In dem Display ist mit dem Bezugszeichen 9 die Meßwertanzeige gekennzeichnet. Mit dem Bezugszeichen 18 ist die Seitenanzeige, sowie die Stoßdämpferangabe gekennzeichnet.

Mit dem erfindungsgemäßen elektronischen Stoßdämpferprüfgerät, wird eine Einrichtung bereitgestellt, die einfach konzipiert, kostengünstig herzustellen ist, ein äußerst möglichst genaues Meßergebnis liefert und dabei einfach zu bedienen ist.

Bezugszeichenliste

1. Stoßdämpferprüfgerät
2. Sensor
3. Meßwertverstärker
4. Mikroprozessor
5. Tastatur
6. Display
7. Peripheriegeräte
8. Schemabild
9. Meßwertanzeige
10. Akku
11. Speichereinheit
12. Gehäuse
13. Auslaß
14. Einlaß
15. Oberseite
16. Seitenwand

17. Bodenbereich
18. Seitenanzeige

**Patentansprüche**

1. Stoßdämpferprüfgerät (1), das mit einem zur Erfassung der Schwingbewegung einer Karosserie geeigneten Sensor (2) und einem zur Signalaufbereitung und Auswertung der erfaßten Daten geeigneten Meßwertverstärker (3), sowie Mitteln zur optischen Wiedergabe der erfaßten und/oder ausgewerteten Angaben versehen ist,
dadurch gekennzeichnet,
daß der Sensor (2), der Meßwertverstärker (3), ein Mikroprozessor (4), Speichereinheit (11), eine Energieversorgung (10) und ein Drucker (7), die das Stoßdämpferprüfgerät (1) bildende Elemente sind, innerhalb eines Gehäuses (12) aufgenommen sind, wobei das Gehäuse (12) mit für Druckerstreifen vorgesehenen Ein- (14) und Auslässen (13) versehen ist und das Gehäuse (12) an mindestens einer Seite, bevorzugterweise auf der Oberseite (15) ein Display (6) als Wiedergabemittel und eine Tastatur (5) aufweist.

2. Stoßdämpferprüfgerät nach Anspruch 1,
dadurch gekennzeichnet,
daß das Display (6) ein Schemabild (8) eines Automobils aufweist.

3. Stoßdämpferprüfgerät nach Anspruch 2,
dadurch gekennzeichnet,
daß Meßwertanzeigen (9) an den vier Eckpunkten (8a bis 8d) des Schemabildes (8) angeordnet sind.

4. Stoßdämpferprüfgerät nach einem der Ansprüche 1 - 3,
dadurch gekennzeichnet,
daß die zur Befehlseingabe fungierende Tastatur aus mindestens fünf Tasten (5a bis 5e) besteht.

5. Stoßdämpferprüfgerät nach einem der Ansprüche 1 - 4,
dadurch geKennzeichnet,
daß der Sensor (2) als Mikrosensor vorliegt.

6. Stoßdämpferprüfgerät nach einem der Ansprüche 1 - 4,
dadurch gekennzeichnet,
daß der Sensor (2) als Piezosensor vorliegt.

7. Stoßdämpferprüfgerät nach Anspruch 1 und 4 bis 6,
dadurch gekennzeichnet,
daß das Display (6) getrennte Meßwertanzeigen (9) aufweist.

**Claims**

1. Instrument (1) for testing shock absorbers comprising a sensor (2) to register the swinging movement of a coach body,
a measured value amplifier (3) for signal processing and evaluation of the registered data
and means for optical reproduction of the registered and / or evaluated data, characterized in that,
the sensor (2), the measured value amplifier (3), a micro processor (4), a storing unit (11), a power supply (10) and a printer (7), which are elements forming the instrument (1) for testing shock absorbers, are included in a housing (12) comprising openings (14, 13) for introduction and extraction of printer strips and having a display (6) as means of reproduction and a keyboard being positioned on at least one surface, preferably on the above surface.

2. Instrument for testing shock absorbers according to claim 1, characterized in that the display (6) shows a schematic (8) of a vehicle.

3. Instrument for testing shock absorbers according to claim 2, characterized in that displays (9) for measured values are positioned in the four corners (8a to 8d) of the schematic (8).

4. Instrument for testing shock absorbers according to one of the claims 1 to 3, characterized in that the keyboard for the command input consists of at least five keys.

5. Instrument for testing shock absorbers according to one of the claims 1 to 4,
characterized in that
the sensor (2) is formed by a micro-sensor.

6. Instrument for testing shock absorbers according to one of the claims 1 to 4,
charaterized in that
the sensor (2) is formed by a piezo-sensor.

7. Instrument for testing shock absorbers
according to the claims 1 and 4 to 6
characterized in that
the display (6) has separated displays (9)
for measured values.


**Revendications**

1. Appareil de contrôle d'amortisseurs (1)
comprennant
un capteur (2) pour enregistrer les oscillations d'une carosserie,
un amplificateur de valeur mesurée (3) pour le traitement du signal et l' exploitation des données enregistrées et des moyens pour la reproduction optique des données enregistrées et / ou exploitées, caractérisé en ce que le capteur (2), l'amplificateur de valeur mesurée (3), un microprocesseur (4), une unité de stockage (11), un approvisionnement en energie (10) et un imprimeur (7), qui forment des elements de l'appareil de contrôle d'amortisseurs (1), sont enfermés dans un boîtier (12) ayant des ouvertures (14,13) pour l'introduction et l'extraction des bandes imprimées et un écran (6) comme moyen de reproduction et un clavier (5) sur au moins une surface, préférablement sur la surface de dessus (15).

2. Appareil de contrôle d'amortisseurs suivant la révendication 1,
caractérisé en ce que
l'écran (6) montre un schéma (8) d'un véhicule.

3. Appareil de contrôle d'amortisseurs suivant la révendication 2, caractérisé en ce qu'il y a des indications de valeur mesurée (9) disposées dans les quatre coins (8a - 8d) du schéma (8).

4. Appareil de contrôle d'amortisseurs suivant une des révendications 1 - 3, caractérisé en ce que le clavier pour l'entrée de commande consiste au moins de cinq touches.

5. Appareil de contrôle d'amortisseurs suivant une des révendications 1 - 4, caractérisé en ce que le capteur (2) est un micro-capteur.

6. Appareil de contrôle d'amortisseurs suivant une des révendications 1 - 4, caractérisé en ce que le capteur (2) est un piézo-capteur.

7. Appareil de côntrole d'amortisseurs suivant une des révendications 1 et 4 - 6, caratérisé en ce que l'écran (6) montre des indications de valeur mesurée separees.

Fig.1

Fig.2

Figur 3

EP 0 355 398 B1

Schaltplan "GT-2000E"

Real-Time-Clock

D0
D1
D2
D3
A0
A1
A2
A3
STOP
RD
WR
CS1
CS2
ALE

Tastatur

S7 S7 S7

S7 S7 S7

S7 S7 S7

MCU

Port D

Port B

Port A

Port H

Port C

Port E

LC-Display 2x16

D0
D1
D2
D3
D4
D5
D6
D7

R/W
RS
E

Druckwerk

R/W
CS
RS
E

D0
D1
D2
D3
D4
D5
D6
D7

Messwerk-Aufnehmer

L7
INDUCTOR
U7A
LM1458H

R7
C7
CAP
U7A
LM1458H

Fig.4

Fig.5

Fig.6